# EUROPEAN PATENT APPLICATION

(11) **EP 4 422 253 A1**
(43) Date of publication of application: **28.08.2024**
(21) Application number: 23214949.2
(22) Date of filing: 07.12.2023
(51) Int. Cl.: H04W 24/02, H04W 24/10, H04W 88/02

(54) **INTERFERENCE COORDINATION FOR AMBIENT DEVICE ILLUMINATION**

(30) Priority: 24.02.2023 FI 20235228
(71) Applicant: Nokia Technologies Oy, 02610 Espoo (FI)
(72) Inventor: BARBU, Oana-Elena, Aalborg (DK); HARREBEK, Johannes, Aalborg (DK); VEJLGAARD, Benny, Gistrup (DK); SVENDSEN, Simon, Aalborg (DK)
(74) Representative: Nokia EPO representatives

(57) **Abstract**

Systems, methods, apparatuses, and computer program products for providing an NR protocol for UE-based tag detection that reduces the interference to other ongoing NR traffic while minimizing the gNB coordination overhead. One method may include receiving (402a) a conditional activation configuration from a network entity configured to activate an ambient device; transmitting (407) an activation signal to the ambient device according to at least one activation rule comprised in the activation configuration on at least one candidate resource that satisfying at least one measurement test condition; and reporting (408) to the network entity at least one resource index that satisfies the at least one measurement test condition and at least one activation rule.

## Description

### TECHNICAL FIELD:

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for providing an interference coordination scheme for activator illumination signals to coexist with normal communication in the cell and neighbor cells for a deployment where tags are activated using 3GPP NR spectrum or guard band.

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY:

In accordance with some example embodiments, a method may include receiving (402a), by a user equipment (430), a conditional activation configuration from a network entity (420) configured to activate an ambient device (450). The method may further include transmitting (407) an activation signal to the ambient device (450) according to at least one activation rule comprised in the activation configuration on at least one candidate resource and satisfying at least one measurement test condition. The method may further include reporting (408) to the network entity (420) at least one resource index that satisfies the at least one measurement test condition and at least one activation rule.

In accordance with certain example embodiments, an apparatus (430) may include means for receiving (402a) a conditional activation configuration from a network entity (420) configured to activate an ambient device (450). The apparatus may further include means for transmitting (407) an activation signal to the ambient device (450) according to at least one activation rule comprised in the activation configuration on at least one candidate resource and satisfying at least one measurement test condition. The apparatus may further include means for reporting (408) to the network entity (420) at least one resource index that satisfies the at least one measurement test condition and at least one activation rule.

In accordance with various example embodiments, a non-transitory computer readable medium may include program instructions that, when executed by an apparatus, cause the apparatus (430) to perform at least a method. The method may include receiving (402a) a conditional activation configuration from a network entity (420) configured to activate an ambient device (450). The method may further include transmitting (407) an activation signal to the ambient device (450) according to at least one activation rule comprised in the activation configuration on at least one candidate resource and satisfying at least one measurement test condition. The method may further include reporting (408) to the network entity (420) at least one resource index that satisfies the at least one measurement test condition and at least one activation rule.

In accordance with some example embodiments, a computer program product may perform a method. The method may include receiving (402a) a conditional activation configuration from a network entity (420) configured to activate an ambient device (450). The method may further include transmitting (407) an activation signal to the ambient device (450) according to at least one activation rule comprised in the activation configuration on at least one candidate resource and satisfying at least one measurement test condition. The method may further include reporting (408) to the network entity (420) at least one resource index that satisfies the at least one measurement test condition and at least one activation rule.

In accordance with certain example embodiments, an apparatus (430) may include at least one processor and at least one memory storing instructions that, when executed by the at least one processor, cause the apparatus at least to receive (402a) a conditional activation configuration from a network entity (420) configured to activate an ambient device (450). The at least one memory and instructions, when executed by the at least one processor, may further cause the apparatus at least to transmit (407) an activation signal to the ambient device (450) according to at least one activation rule comprised in the activation configuration on at least one candidate resource and satisfying at least one measurement test condition. The at least one memory and instructions, when executed by the at least one processor, may further cause the apparatus at least to report (408) to the network entity (420) at least one resource index that satisfies the at least one measurement test condition and at least one activation rule.

In accordance with various example embodiments, an apparatus (430) may include receiving circuitry configured to receive (402a) a conditional activation configuration from a network entity (420) configured to activate an ambient device (450). The apparatus may further include transmitting circuitry configured to transmit (407) an activation signal to the ambient device (450) according to at least one activation rule comprised in the activation configuration on at least one candidate resource and satisfying at least one measurement test condition. The apparatus may further include reporting circuitry configured to report (408) to the network entity (420) at least one resource index that satisfies the at least one measurement test condition and at least one activation rule.

In accordance with some example embodiments, a method may include receiving (402b), by a user equipment (440), a conditional reading configuration from a network entity (420) configured to read an ambient device (450). The method may further include activating (407) the reading of the ambient device (450) according to at least one reading rule comprised in the activation configuration on at least one candidate resource passing a test of at least one condition. The method may further include reporting (409) to the network entity (420) at least one resource index that satisfies the at least one reading rule and passed the test of the at least one condition.

In accordance with certain example embodiments, an apparatus (440) may include means for receiving (402b) a conditional reading configuration from a network entity (420) configured to read an ambient device (450). The apparatus may further include means for activating (407) the reading of the ambient device (450) according to at least one reading rule comprised in the activation configuration on at least one candidate resource passing a test of at least one condition. The apparatus may further include means for reporting (409) to the network entity (420) at least one resource index that satisfies the at least one reading rule and passed the test of the at least one condition.

In accordance with various example embodiments, a non-transitory computer readable medium may include program instructions that, when executed by an apparatus (440), cause the apparatus to perform at least a method. The method may include receiving (402b) a conditional reading configuration from a network entity (420) configured to read an ambient device (450). The method may further include activating (407) the reading of the ambient device (450) according to at least one reading rule comprised in the activation configuration on at least one candidate resource passing a test of at least one condition. The method may further include reporting (409) to the network entity (420) at least one resource index that satisfies the at least one reading rule and passed the test of the at least one condition.

In accordance with some example embodiments, a computer program product may perform a method. The method may include receiving (402b) a conditional reading configuration from a network entity (420) configured to read an ambient device (450). The method may further include activating (407) the reading of the ambient device (450) according to at least one reading rule comprised in the activation configuration on at least one candidate resource passing a test of at least one condition. The method may further include reporting (409) to the network entity (420) at least one resource index that satisfies the at least one reading rule and passed the test of the at least one condition.

In accordance with certain example embodiments, an apparatus (440) may include at least one processor and at least one memory storing instructions that, when executed by the at least one processor, cause the apparatus at least to receive (402b) a conditional reading configuration from a network entity (420) configured to read an ambient device (450). The at least one memory and instructions, when executed by the at least one processor, may further cause the apparatus at least to activate (407) the reading of the ambient device (450) according to at least one reading rule comprised in the activation configuration on at least one candidate resource passing a test of at least one condition. The at least one memory and instructions, when executed by the at least one processor, may further cause the apparatus at least to report (409) to the network entity (420) at least one resource index that satisfies the at least one reading rule and passed the test of the at least one condition.

In accordance with various example embodiments, an apparatus may include receiving circuitry configured to receive (402b) a conditional reading configuration from a network entity (420) configured to read an ambient device (450). The apparatus may further include activating circuitry configured to activate (407) the reading of the ambient device (450) according to at least one reading rule comprised in the activation configuration on at least one candidate resource passing a test of at least one condition. The apparatus may further include reporting circuitry configured to report (409) to the network entity (420) at least one resource index that satisfies the at least one reading rule and passed the test of the at least one condition.

In accordance with some example embodiments, a method may include selecting (401), by a network entity (420), at least one of a first device (430) or a second device (440). The method may further include transmitting at least one of (402a) to the first device (430) a conditional activation configuration to activate an ambient device (450), or (402b) to the second device (440) a conditional reading configuration from a network entity configured to read the ambient device. The method may further include receiving at least one of (408) from the first device (430) at least one resource index that satisfies at least one measurement test condition and at least one activation rule, or (409) from the second device (440) at least one resource that satisfies at least one of the measurement test conditions and at least one reading rule.

In accordance with certain example embodiments, an apparatus (420) may include means for selecting (401) at least one of a first device (430) or a second device (440). The apparatus may further include means for transmitting at least one of (402a) to the first device (430) a conditional activation configuration to activate an ambient device (450), or (402b) to the second device (440) a conditional reading configuration from a network entity configured to read the ambient device. The apparatus may further include means for receiving at least one of (408) from the first device (430) at least one resource index that satisfies at least one measurement test condition and at least one activation rule, or (409) from the second device (440) at least one resource that satisfies at least one of the measurement test conditions and at least one reading rule.

In accordance with various example embodiments, a non-transitory computer readable medium may include program instructions that, when executed by an apparatus (420), cause the apparatus to perform at least a method. The method may include selecting (401) at least one of a first device (430) or a second device (440). The method may further include transmitting at least one of (402a) to the first device (430) a conditional activation configuration to activate an ambient device (450), or (402b) to the second device (440) a conditional reading configuration from a network entity configured to read the ambient device. The method may further include receiving at least one of (408) from the first device (430) at least one resource index that satisfies at least one measurement test condition and at least one activation rule, or (409) from the second device (440) at least one resource that satisfies at least one of the measurement test conditions and at least one reading rule.

In accordance with some example embodiments, a computer program product may perform a method. The method may include selecting (401) at least one of a first device (430) or a second device (440). The method may further include transmitting at least one of (402a) to the first device (430) a conditional activation configuration to activate an ambient device (450), or (402b) to the second device (440) a conditional reading configuration from a network entity configured to read the ambient device. The method may further include receiving at least one of (408) from the first device (430) at least one resource index that satisfies at least one measurement test condition and at least one activation rule, or (409) from the second device (440) at least one resource that satisfies at least one of the measurement test conditions and at least one reading rule.

In accordance with certain example embodiments, an apparatus (420) may include at least one processor and at least one memory storing instructions that, when executed by the at least one processor, cause the apparatus at least to select (401) at least one of a first device (430) or a second device (440). The at least one memory and instructions, when executed by the at least one processor, may further cause the apparatus at least to transmit at least one of (402a) to the first device (430) a conditional activation configuration to activate an ambient device (450), or (402b) to the second device (440) a conditional reading configuration from a network entity configured to read the ambient device. The at least one memory and instructions, when executed by the at least one processor, may further cause the apparatus at least to receive at least one of (408) from the first device (430) at least one resource index that satisfies at least one measurement test condition and at least one activation rule, or (409) from the second device (440) at least one resource that satisfies at least one of the measurement test conditions and at least one reading rule.

In accordance with various example embodiments, an apparatus (420) may include selecting circuitry configured to select (401) at least one of a first device (430) or a second device (440). The apparatus may further include transmitting circuitry configured to transmit at least one of (402a) to the first device (430) a conditional activation configuration to activate an ambient device (450), or (402b) to the second device (440) a conditional reading configuration from a network entity configured to read the ambient device. The apparatus may further include receiving circuitry configured to receive at least one of (408) from the first device (430) at least one resource index that satisfies at least one measurement test condition and at least one activation rule, or (409) from the second device (440) at least one resource that satisfies at least one of the measurement test conditions and at least one reading rule.

### BRIEF DESCRIPTION OF THE DRAWINGS:

For a proper understanding of example embodiments, reference should be made to the accompanying drawings, wherein:
FIG. 1 illustrates an example of cross-link interference;
FIG. 2 illustrates an example of tag illumination interference with time division duplex synchronized;
FIG. 3 illustrates an example of tag illumination interference with non-time division duplex synchronized;
FIG. 4 illustrates an example of a signaling diagram according to certain example embodiments;
FIG. 5 illustrates an example of a flow diagram of a method that may be performed by a candidate activator user equipment according to some example embodiments;
FIG. 6 illustrates an example of a flow diagram of a method that may be performed by a candidate reader user equipment according to various example embodiments;
FIG. 7 illustrates an example of a flow diagram of a method that may be performed by a base station according to certain example embodiments;
FIG. 8 illustrates an example of various network devices according to some example embodiments; and
FIG. 9 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing an NR protocol for UE-based tag detection is not intended to limit the scope of certain example embodiments, but is instead representative of selected example embodiments.

Within Third Generation Partnership Project (3GPP), a passive radio may include a device harnesses energy from wireless signals sent on specific carriers and/or bandwidths, and charges a circuitry that, when activated, emits/reflects a signal that encodes at least the identifier (ID) of the passive radio. A typical passive radio system architecture may include the passive radio itself. The energy may be harnessed over a range of frequencies, and the passive radio may listen for activation signals. Once the passive radio detects an activation signal, the passive radio may emit/reflect a signal which is specific to that passive radio ID. The architecture may also include an activator, which may be a device that sends the activation signal configured to activate (i. e., wake up) the passive radio. In addition, the passive radio architecture may also include a reader device, which may listen and detect the signals from the passive radio device. The reader may or may not be collocated with the activator device.

With respect to IoT applications, 3GPP has specified NB-IoT/enhanced machined type communication (eMTC) and NR reduced capability (RedCap) to meet the requirements of low cost and low power devices for wide area IoT communication. These IoT devices typically consume tens or hundreds of milliwatts of power when transmitting/receiving, yet have minimal cost. However, in order to support IoT, IoT devices will need to consume even less power and cost even less, especially in many applications that require battery-free devices.

3GPP has also studied IoT technology in a variety of ways that are suitable for deployment in a 3GPP system, which relies on ultra-low complexity devices with ultra-low power consumption for very-low end IoT applications. 3GPP may provide clear distinctions between these applications, such as by addressing use cases and scenarios that could not otherwise be fulfilled using existing 3GPP low-power wide-area (LPWA) IoT technology (*e.g.,* NB-IoT technology with reduced peak transmission power).

With respect to energy storage, such devices may include battery-free devices with no energy storage capabilities at all, and instead be completely dependent upon the availability of an external energy source. Devices may also have limited energy storage capabilities that do not need to be replaced or recharged manually. Device categorization based on such characteristics (*e.g.*, energy source, energy storage capability, passive/active transmission, etc.) may be studied further based upon their relevant use cases. The peak power consumption of a device may be limited by its practical form factor for its intended use cases, and may consider its energy source.

The development of such IoT devices may also identify suitable deployment scenarios and their characteristics, such as indoor/outdoor environment deployment; base station characteristics (*e.g*., macro/micro/pico cells-based deployments); connectivity topologies, including which node(s) (*e.g*., base station, UE, relay, repeater, etc.) can communicate with target devices; time division duplex (TDD)/frequency division duplex (FDD), and frequency bands in licensed or unlicensed spectrum; coexistence with UEs and infrastructure in frequency bands for existing 3GPP technologies; and device-originated and/or device-terminated traffic assumptions. There may be more than one deployment scenario identified for a use case, and a deployment scenario may be common to more than one use case.

In addition, a set of RAN design targets may be formulated based on the identified deployment scenarios and their characteristics for the relevant use cases, such as power consumption, complexity, coverage, data rate, and positioning accuracy.

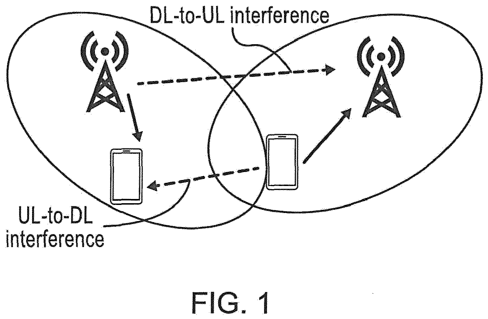

Passive radios may require an entity (*e.g.*, UE, gNB, etc.) to send an illumination signal to initiate a communication session. As depicted in FIG. 1, when using 3GPP spectrum for passive radio activation, the illumination entity may create interference in the cell and neighbor cells, similar to known cross-link interference (CLI) scenarios.

Discovering a passive IoT device may be challenging due to the inherent nature of the passive radio and the variability of the wireless environment. Specifically, a passive radio may not have a power source, and instead may harvest energy from external sources (*e.g*., radio waves); may hear other radios only in its own proximity (*e.g.*, within 5-10m radius); and may hear other radios only if the other radios operate on a restricted set of specific time-frequency resources.

Similarly, a NR network may only discover a passive radio tag if both the activator and reader are available (*e.g*., not performing other tasks), in close proximity to the tag, and are using the correct resources to illuminate and respectively read the tag. These requirements can be difficult to meet since the network must ensure both spatial (*i.e*., available and in close proximity) and NR time-frequency resources are simultaneously available for the tag discovery. However, in most cases, the NR spectrum in the vicinity of the tag may be used for standard NR communication and/or NR positioning, and thus, may be unavailable to the activator/reader pairs for tag discovery (even if the later devices are present and available).

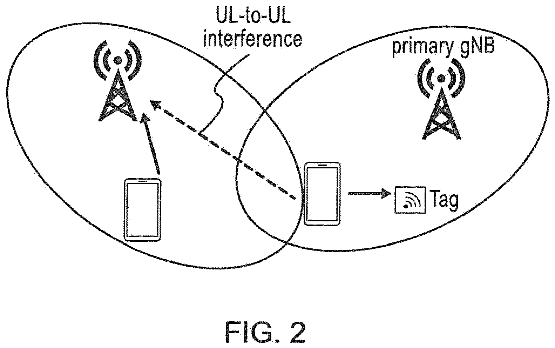

In addition, when the activator transmits an illumination signal, there is a risk that the illumination signal will create interference in the cell and neighbor cells. To avoid degradation of the normal communication in the cell and neighbor cells, interference coordination and/or mitigation may be used. For example, in a TDD system, the interference scenario from the UE take illumination session may appear as shown in FIG. 2 when illuminating the tag during the normal synchronized TDD timeslots.

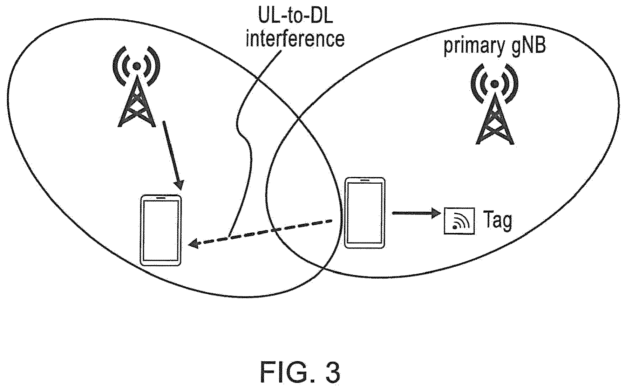

The scenario shown in FIG. 2 is similar to the normal communication as the UE transmits during the synchronized UL timeslots, with one difference being that there may be no DL communication from the primary base station. They may not be DL communications from the base station in the normal case since the UE illuminates in the UL slot. The base station is normal in receive mode, and thus, may potentially be a component of the tag readers. Since a primary base station may not be active during the tag illumination process, another option may be to use the DL synchronized timeslots for the tag illumination. FIG. 3 depicts such changes in the interference scenario. Depending on the power level, as well as the location of active devices in the cell and neighbor cells, the interference scenario may be very different.

Certain example embodiments described herein may have various benefits and/or advantages to overcome the disadvantages described above. For example, in certain example embodiments the tag illumination process may reduce interference in the cell and allow for simultaneous communication within the same time/frequency and/or space resources. In addition, the tag illumination process may reduce interference in neighbor cells. In various example embodiments, system impact for passive tag communication may be significantly reduced, and spectral efficiency may be improved since the gNB does not send configuration signals to start/stop detection. In addition, certain example embodiments may improve power detection latency since the UEs may trigger tag detection without base station approval. Thus, certain example embodiments discussed below are directed to improvements in computerrelated technology.

Described herein are techniques to enable UEs to autonomously deploy tag detection in NR Uu spectrum. The base station (*e.g*., gNB) may configure sets of candidate activators, candidate readers, and candidate time-frequency resources. The base station may also configure conditions of session deployment so that the Uu traffic is negligibly perturbed. The base station may then relinquish any subsequent coordination related to the detection session. By doing so, the base station may allow the UEs to trigger and finalize the tag detection autonomously, while improving the spectral efficiency and reducing the tag detection latency.

In general, the base station may select the candidate activator/illuminator, reader, candidate time frequency resources for tag detection, and then trigger the candidate activator/illuminator and candidate reader(s). In turn, the candidate activator/illuminator may perform the process of spectral occupancy threshold (SOT) by performing the requested measurements on candidate resources. The candidate activator/illuminator may also check illumination threshold of measurements and SOT, check reader threshold of measurements and SOT, and then start an illumination and reader process. The activator/illuminator and reader may then both transmit the resource index to the base station, location management function (LMF), or other network node. Upon receiving the resource indexes, the base station may pair the illuminator/reader for successful tag detections.

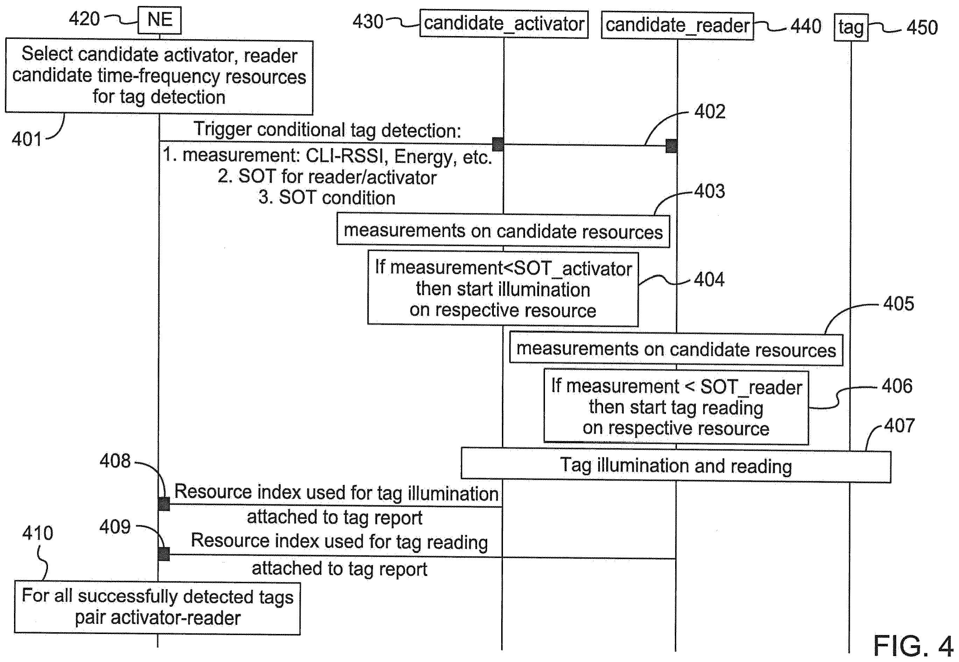

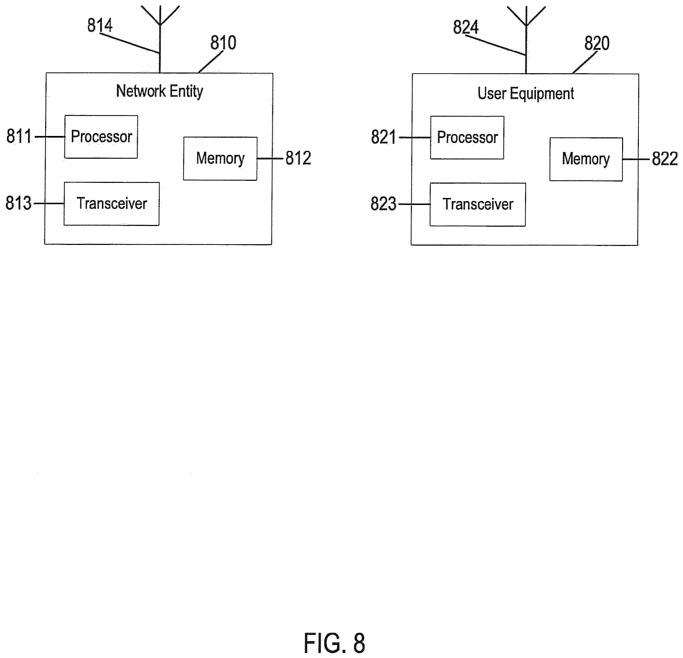

FIG. 4 illustrates an example of a signaling diagram depicting for providing an NR protocol for UE-based tag detection that may reduce the interference to other ongoing NR traffic while minimizing the gNB coordination overhead. NE 420, Candidate Activator 430, Candidate Reader 440, and Tag 450 may be similar to NE 810 and/or UE 820, as illustrated in FIG. 8, according to certain example embodiments.

At step 401, NE 420 may select at least one candidate activator UE (*i.e.,* candidate activator UE 430) to activate a tag (*e.g.,* tag 450), which may also be referred to as an illuminator. NE 420 may also select at least one candidate reader UE (*i.e.,* candidate reader UE 440) to read tag signals, which tag 450 may generate upon activation. In certain example embodiments, rather than selecting UEs (*e.g*., UE 430 and UE 440), NE 420 may select another NR element for the same purpose (*e.g*., transmit receive point (TRP), road side unit (RSU), gNB, etc.).

Optionally, candidate activator UE 430 may request time/frequency and/or space resources for tag detection from NE 420. This request may be mobile originated (MO) when activator UE 430 itself needs the content of the tag and/or has received the request from another NR element directly.

At step 402a, NE 420 may trigger conditional tag detection (*e.g*., activation configuration including activation rule) for candidate activator UE 430, and similarly at 402b, NE 420 may trigger conditional tag detection (*e.g*., activation configuration including reading rule) for candidate reader UE 440. For example, the triggering may be performed by selecting the time/frequency and/or space resources for tag detection procedure with defined boundaries, for example time duration, carrier frequency, bandwidth, and a SOT. The set of resources may be referred to as a candidate set.

In some example embodiments, NE 420 may conditionally trigger tag detection by enabling (*e.g*., via explicit instruction to begin transmitting an activation signal if an SOT test is passed) candidate activator UE 430 to illuminate tag 450 in the candidate set if the measured power is below SOT. SOT does not need to be identical for candidate activator UE 430 and candidate reader UE 440. It may be beneficial for the SOT to be unique by being dependent upon the UE, location, and cell.

In various example embodiments, NE 420 may conditionally trigger the tag detection by enabling (*e.g*., via explicit instruction to begin transmitting an activation signal if a SOT test is passed) candidate reader UE 440 to start listening for tag signals whenever the measured power in the candidate set is below SOT. By enabling candidate activator UE 430 and candidate reader UE 440 to autonomously deploy the tag detection, NE 420 may relinquish any subsequent coordination related to the detection session, thereby improving spectral efficiency and reducing tag detection latency.

In certain example embodiments, NE 420 may configure candidate activator UE 430 and/or candidate reader UE 440 to measure any of the average power in given resources, the maximum power variation in the resources (*e.g*., the difference between the maximum and minimum power levels), and the cumulative signal energy as the integral of the instantaneous power levels over the observation time window without requiring candidate activator UE 430 and candidate reader UE 440 to synchronize to NE 420 using those resources.

At step 403, candidate activator UE 430 may perform measurements on candidate resources, for example, to measure CLI levels. In certain example embodiments, candidate activator UE 430 may measure CLI-receive signal strength indicator (RSSI) for each resource in the candidate set.

At step 404, candidate activator UE 430 may determine whether the RSSI measurements at 403 are less than a SOT level. These resources may be considered as sufficiently free and eligible for tag detection. Additionally or alternatively, candidate activator UE 430 may measure CLI-reference signal received power (RSRP) of specific demodulation reference signal (DMRS). Thus, candidate activator UE 430 may measure the resources as instructed by NE 420 and assess measurements against SOT. In certain example embodiments, candidate activator UE 430 may use the measurements to select one resource from the candidate set, select a TX power and TX precoder, and transmit the illumination signal on the selected resource, if such capability is available.

At step 405, candidate reader UE 440 may perform measurements on candidate resources, for example, to measure CLI levels. In certain example embodiments, candidate reader UE 440 may measure CLI-RSSI for each resource in the candidate set.

At step 406, candidate reader UE 440 may determine whether the RSSI measurements at 405 are less than a SOT level. These resources may be considered as sufficiently free and eligible for tag detection. Additionally or alternatively, candidate reader UE 440 may measure CLI-RSRP of specific DMRS. Thus, candidate reader UE 440 may measure the resources as instructed by NE 420 and assess measurements against SOT. In some example embodiments, candidate reader UE 440 may trigger the tag reading process if the measurements are below the SOT, or alternatively, deliver the report first and, only upon pairing, perform detection.

At step 407, candidate activator UE 430, candidate reader UE 440, and tag 450 may perform tag illumination and reading.

At step 408, candidate activator UE 430 may report to NE 420 resources where RSRP is below SOT. Candidate activator UE 430 may notify NE 420 about the measurement outcome, as well as the resource set which was eventually selected for activating which tag.

Similarly, at step 409, candidate reader UE 440 may report to NE 420 resources where RSRP is below SOT. Upon tag detection, candidate reader UE 440 may report tag information to NE 420, and as well as the outcome of the measurement (*e.g.*, which candidate resource set was used for reading which tag).

At step 410, for all successfully detected tags, NE 420 may pair candidate activator UE 430 and candidate reader UE 440. For example, NE 420 may pair candidate activator UE 430 and candidate reader UE 440 when they use the same candidate resource set for detecting a common set of tags. These pairs may be for future tag detection sessions (*e.g*., may reduce the search space for performing step 401 for other tags).

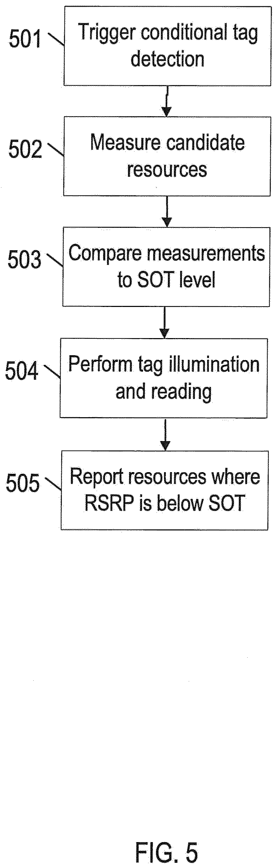

FIG. 5 illustrates an example of a flow diagram of a method that may be performed by a candidate activator UE, such as UE 820 illustrated in FIG. 8, according to various example embodiments.

At step 501, the method may include triggering (step 402a) conditional tag detection from a NE, such as NE 810 illustrated in FIG. 8. For example, the triggering may be performed by selecting the time/frequency and/or space resources for tag detection procedure with defined boundaries, for example time duration, frequency, and/or space and a SOT. The set of resources may be referred to as a candidate set.

In some example embodiments, the method may include conditionally triggering tag detection by enabling (*e.g*., via explicit instruction to begin transmitting an activation signal if a SOT test is passed) the candidate activator UE to illuminate a tag in the candidate set if the measured power is below SOT. SOT does not need to be identical for the candidate activator UE and a candidate reader UE. It may be beneficial for the SOT to be unique by being dependent upon the UE, location, and cell.

In various example embodiments, the candidate activator UE may conditionally trigger the tag detection by being enabled to start listening for tag signals whenever the measured power in the candidate set is below SOT. By enabling the candidate activator UE to autonomously deploy the tag detection, the NE may relinquish any subsequent coordination related to the detection session, thereby improving spectral efficiency and reducing tag detection latency.

In certain example embodiments, the candidate activator UE may be configured by the NE to measure any of the average power in given resources, the maximum power variation in the resources (*e.g.*, the difference between the maximum and minimum power levels), and the cumulative signal energy as the integral of the instantaneous power levels over the observation time window without requiring the candidate activator UE to synchronize to the NE using those resources.

At step 502, the method may include performing (step 403) measurements on candidate resources, for example, to measure CLI levels. In certain example embodiments, the candidate activator UE may measure CLI-RSSI for each resource in the candidate set.

At step 503, the method may include determining (step 404) whether the RSSI measurements at 502 are less than a SOT level. These resources may be considered as sufficiently free and eligible for tag detection. Additionally or alternatively, the candidate activator UE may measure CLI-RSRP of specific DMRS. Thus, the candidate activator UE may measure the resources as instructed by the NE and assess measurements against SOT. In certain example embodiments, the candidate activator UE may use the measurements to select one resource from the candidate set, select a TX power and TX precoder, and transmit the illumination signal on the selected resource, if such capability is available.

At step 504, the method may include performing (step 407) tag illumination and reading.

At step 505, the method may include reporting (step 408) to the NE resources where RSRP is below SOT. The candidate activator UE may notify the NE about the measurement outcome, as well as the resource set which was eventually selected for activating which tag.

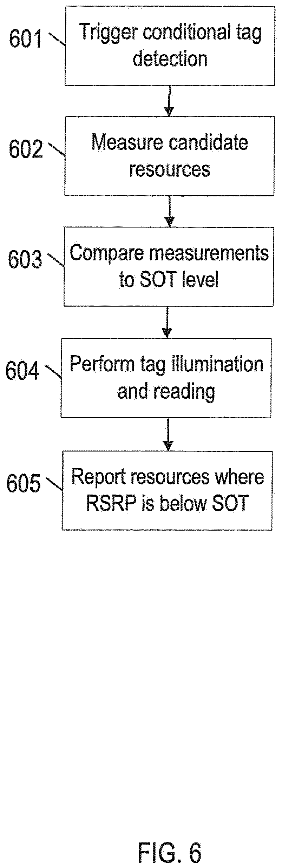

FIG. 6 illustrates an example of a flow diagram of a method that may be performed by a candidate reader UE, such as UE 820 illustrated in FIG. 8, according to various example embodiments.

At step 601, the method may include triggering (step 402b) conditional tag detection for the candidate reader UE. For example, the triggering may be performed by a NE selecting the time/frequency and/or space resources for tag detection procedure with defined boundaries, for example time duration, frequency, and a SOT. The set of resources may be referred to as a candidate set.

In some example embodiments, the method may include conditionally triggering tag detection by enabling (*e.g*., via explicit instruction to begin transmitting an activation signal if a SOT test is passed) the candidate activator UE to illuminate a tag in the candidate set if the measured power is below SOT. SOT does not need to be identical for the candidate reader UE. It may be beneficial for the SOT to be unique by being dependent upon the UE, location, and cell.

In various example embodiments, the NE may conditionally trigger the tag detection by enabling (*e.g*., via explicit instruction to begin transmitting an activation signal if a SOT test is passed) a candidate reader UE to start listening for tag signals whenever the measured power in the candidate set is below SOT. By enabling the candidate activator UE and candidate reader UE to autonomously deploy the tag detection, the NE may relinquish any subsequent coordination related to the detection session, thereby improving spectral efficiency and reducing tag detection latency.

In certain example embodiments, the NE may configure the candidate reader UE to measure any of the average power in given resources, the maximum power variation in the resources (*e.g*., the difference between the maximum and minimum power levels), and the cumulative signal energy as the integral of the instantaneous power levels over the observation time window without requiring the candidate reader UE to synchronize to the NE using those resources.

At step 602, the method may include performing (step 405) measurements on candidate resources, for example, to measure CLI levels. In certain example embodiments, the candidate reader UE may measure CLI-RSSI for each resource in the candidate set.

At step 603, the method may include determining (step 406) whether the RSSI measurements at 602 are less than a SOT level. These resources may be considered as sufficiently free and eligible for tag detection. Additionally or alternatively, the method may include measuring CLI-RSRP of specific DMRS. Thus, the candidate reader UE may measure the resources as instructed by the NE and assess measurements against SOT. In some example embodiments, the candidate reader UE may trigger the tag reading process if the measurements are below the SOT, or alternatively, deliver the report first and, only upon pairing, perform detection.

At step 604, the method may include performing (step 407) tag illumination and reading.

At step 605, the method may include reporting (step 409) to the NE resources where RSRP is below SOT. Upon tag detection, the candidate reader UE may report tag information to the NE, and as well as the outcome of the measurement (*e.g*., which candidate resource set was used for reading which tag).

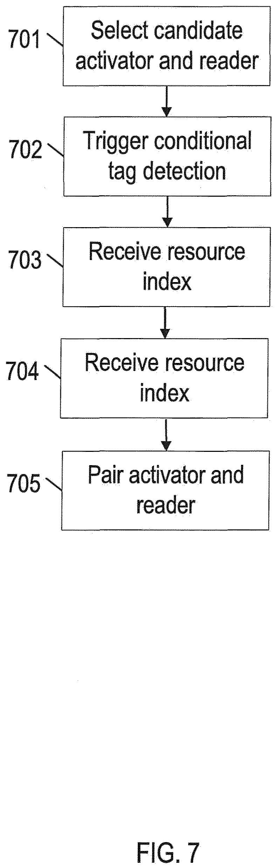

FIG. 7 illustrates an example of a flow diagram of a method that may be performed by a base station, such as NE 810 illustrated in FIG.8, according to various example embodiments.

At step 701, the method may include selecting (step 401) at least one candidate activator UE to activate a tag, which may also be referred to as an illuminator. The NE may also select at least one candidate reader UE to read tag signals, which the tag may generate upon activation. In certain example embodiments, rather than selecting UEs, the NE may select another NR element for the same purpose (*e.g.*, transmit receive point (TRP), road side unit (RSU), gNB, etc.).

Optionally, the candidate activator UE may request time/frequency and/or space resources for tag detection from the NE. This request may be mobile originated (MO) when the activator UE itself needs the content of the tag and/or has received the request from another NR element directly.

At step 702, the method may include triggering conditional tag detection for the candidate activator UE (step 402a) and/or the candidate reader UE (step 402b). For example, the triggering may be performed by selecting the time/frequency and/or space resources for tag detection procedure with defined boundaries, for example time duration, frequency, and a SOT. The set of resources may be referred to as a candidate set.

In some example embodiments, the NE may conditionally trigger tag detection by enabling (*e.g*., via explicit instruction to begin transmitting an activation signal if a SOT test is passed) the candidate activator UE to illuminate the tag in the candidate set if the measured power is below SOT. SOT does not need to be identical for the candidate activator UE and the candidate reader UE. It may be beneficial for the SOT to be unique by being dependent upon the UE, location, and cell.

In various example embodiments, the NE may conditionally trigger the tag detection by enabling (*e.g.*, via explicit instruction to begin transmitting an activation signal if a SOT test is passed) the candidate reader UE to start listening for tag signals whenever the measured power in the candidate set is below SOT. By enabling the candidate activator UE and the candidate reader UE to autonomously deploy the tag detection, the NE may relinquish any subsequent coordination related to the detection session, thereby improving spectral efficiency and reducing tag detection latency.

In certain example embodiments, the NE may configure the candidate activator UE and/or the candidate reader UE to measure any of the average power in given resources, the maximum power variation in the resources (*e.g*., the difference between the maximum and minimum power levels), and the cumulative signal energy as the integral of the instantaneous power levels over the observation time window without requiring the candidate activator UE and the candidate reader UE to synchronize to the NE using those resources.

At step 703, the method may include receiving (step 408) from the candidate activator UE resources where RSRP is below SOT. The candidate activator UE may notify the NE about the measurement outcome, as well as the resource set which was eventually selected for activating which tag.

Similarly, at step 704, the method may include receiving (step 409) from the candidate reader UE resources where RSRP is below SOT. Upon tag detection, the candidate reader UE may report tag information to the NE, and as well as the outcome of the measurement (*e.g*., which candidate resource set was used for reading which tag).

At step 705, for all successfully detected tags, the method may include pairing (step 410) the candidate activator UE and the candidate reader UE. For example, the NE may pair the candidate activator UE and the candidate reader UE when they use the same candidate resource set for detecting a common set of tags. These pairs may be for future tag detection sessions (*e.g.*, may reduce the search space for performing step 701 for other tags).

FIG. 8illustrates an example of a system according to certain example embodiments. In one example embodiment, a system may include multiple devices, such as, for example, NE 810 and/or UE 820.

NE 810 may be one or more of a base station (*e.g*., 3G UMTS NodeB, 4G LTE Evolved NodeB, or 5G NR Next Generation NodeB), a serving gateway, a server, and/or any other access node or combination thereof.

NE 810 may further comprise at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 820 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 810 and/or UE 820 may be one or more of a citizens broadband radio service device (CBSD).

NE 810 and/or UE 820 may include at least one processor, respectively indicated as 811 and 821. Processors 811 and 821 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 812 and 822. The memory may be fixed or removable. The memory may include computer program instructions or computer code contained therein. Memories 812 and 822 may independently be any suitable storage device, such as a non-transitory computer-readable medium. The term "non-transitory," as used herein, may correspond to a limitation of the medium itself (*i*.*e.,* tangible, not a signal) as opposed to a limitation on data storage persistency (*e.g*., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 811 and 821, memories 812 and 822, and any subset thereof, may be configured to provide means corresponding to the various blocks of FIGs. 4-7. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 8, transceivers 813 and 823 may be provided, and one or more devices may also include at least one antenna, respectively illustrated as 814 and 824. The device may have many antennas, such as an array of antennas configured for multiple input multiple output (MIMO) communications, or multiple antennas for multiple RATs. Other configurations of these devices, for example, may be provided. Transceivers 813 and 823 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.*, FIGs. 4-7). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus (430) may include at least one processor (821) and at least one memory (822) storing instructions that, when executed by the at least one processor, cause the apparatus at least to receive (402a) a conditional activation configuration from a network entity (420) configured to activate an ambient device (450); transmit (407) an activation signal to the ambient device (450) according to at least one activation rule included in the activation configuration on at least one candidate resource and satisfying at least one measurement test condition; and report (408) to the network entity (420) at least one resource index that satisfies the at least one measurement test condition and at least one activation rule.

In some example embodiments, the conditional activation configuration may include at least one of the following: a set of candidate times, frequencies, space, and time and frequency resources to be tested by the apparatus; at least one measurement associated with spectral availability of each of the candidate resources; the at least one measurement test condition; or the at least one activation rule.

In various example embodiments, the at least one activation rule may include at least one of the following: at least one received signal strength indicator measurement is less than a spectral occupancy threshold; or at least one cross-link interference reference signal received power is less than the spectral occupancy threshold.

In certain example embodiments, the at least one activation rule may be configured to be activated upon satisfaction of at least one condition including at least one of the following: transmit (407) at least one activation signal; abort at least one transmission attempt; or defer transmission by a time offset.

In various example embodiments, the ambient device may include an Internet of Things device.

In certain example embodiments, an apparatus (440) may include at least one processor (821) and at least one memory (822) storing instructions that, when executed by the at least one processor, cause the apparatus at least to: receive (402b) a conditional reading configuration from a network entity (420) configured to read an ambient device (450); activate (407) the reading of the ambient device (450) according to at least one reading rule included in the activation configuration on at least one candidate resource passing a test of at least one condition; and report (409) to the network entity (420) at least one resource index that satisfies the at least one reading rule and passed the test of the at least one condition.

In some example embodiments, the conditional reading configuration may include at least one of the following: a set of candidate times, frequencies, space, and time and frequency resources to be tested by the apparatus; at least one measurement associated with spectral availability of each of the candidate resources; the at least one measurement test condition; or the at least one reading rule.

In various example embodiments, the at least one reading rule may include at least one of the following: at least one received signal strength indicator measurement is less than a spectral occupancy threshold; or at least one cross-link interference reference signal received power is less than the spectral occupancy threshold.

In certain example embodiments, the at least one reading rule may be configured to be activated upon satisfaction of at least one condition including at least one of the following: read (407) at least one return signal reflected from the ambient device in response to an activation signal; or deferring reading by a time offset.

In some example embodiments, the ambient device may include an Internet of Things device.

In various example embodiments, an apparatus (810) may include at least one processor (811) and at least one memory (812) storing instructions that, when executed by the at least one processor, cause the apparatus at least to select (401) at least one of a first device (430) or a second device (440); transmit at least one of the following: (402a) to the first device (430) a conditional activation configuration to activate an ambient device (450); or (402b) to the second device (440) a conditional reading configuration from a network entity configured to read the ambient device; and receive at least one of the following: (408) from the first device (430) at least one resource index that satisfies at least one measurement test condition and at least one activation rule; or (409) from the second device (440) at least one resource that satisfies at least one of the measurement test conditions and at least one reading rule.

In some example embodiments, the first device may include a candidate activator user equipment.

In various example embodiments, the second device may include a candidate reader user equipment.

In certain example embodiments, the conditional activation configuration may include at least one of the following: a set of candidate times, frequencies, space, and time and frequency resources to be tested by the first device; at least one measurement associated with spectral availability of each of the candidate resources; the at least one measurement test condition; or the at least one activation rule.

In some example embodiments, the at least one activation rule may be configured to be activated upon satisfaction of at least one condition including at least one of the following: transmitting (407) at least one activation signal; or deferring transmission by a time offset.

In various example embodiments, the ambient device may include an Internet of Things device.

In certain example embodiments, an apparatus (430) may include means for receiving (402a) a conditional activation configuration from a network entity (420) configured to activate an ambient device (450); means for transmitting (407) an activation signal to the ambient device (450) according to at least one activation rule included in the activation configuration on at least one candidate resource and satisfying at least one measurement test condition; and means for reporting (408) to the network entity (420) at least one resource index that satisfies the at least one measurement test condition and at least one activation rule.

In some example embodiments, the conditional activation configuration may include at least one of the following: a set of candidate times, frequencies, space, and time and frequency resources to be tested by the apparatus; at least one measurement associated with spectral availability of each of the candidate resources; the at least one measurement test condition; or the at least one activation rule.

In various example embodiments, the at least one activation rule may include at least one of the following: at least one received signal strength indicator measurement is less than a spectral occupancy threshold; or at least one cross-link interference reference signal received power is less than the spectral occupancy threshold.

In certain example embodiments, the at least one activation rule may be configured to be activated upon satisfaction of at least one condition including at least one of the following: transmit (407) at least one activation signal; abort at least one transmission attempt; or defer transmission by a time offset.

In some example embodiments, the ambient device may include an Internet of Things device.

In various example embodiments, an apparatus (440) may include means for receiving (402b) a conditional reading configuration from a network entity (420) configured to read an ambient device (450); means for activating (407) the reading of the ambient device (450) according to at least one reading rule included in the activation configuration on at least one candidate resource passing a test of at least one condition; and means for reporting (409) to the network entity (420) at least one resource index that satisfies the at least one reading rule and passed the test of the at least one condition.

In certain example embodiments, the conditional reading configuration may include at least one of the following: a set of candidate times, frequencies, space, and time and frequency resources to be tested by the apparatus; at least one measurement associated with spectral availability of each of the candidate resources; the at least one measurement test condition; or the at least one reading rule.

In some example embodiments, the at least one reading rule may include at least one of the following: at least one received signal strength indicator measurement is less than a spectral occupancy threshold; or at least one cross-link interference reference signal received power is less than the spectral occupancy threshold.

In various example embodiments, the at least one reading rule may be configured to be activated upon satisfaction of at least one condition including at least one of the following: read (407) at least one return signal reflected from the ambient device in response to an activation signal; or defer reading by a time offset.

In certain example embodiments, the ambient device may include an Internet of Things device.

In certain example embodiments, an apparatus may include means for selecting (401) at least one of a first device (430) or a second device (440); means for transmitting at least one of the following: (402a) to the first device (430) a conditional activation configuration to activate an ambient device (450); or (402b) to the second device (440) a conditional reading configuration from a network entity configured to read the ambient device; and means for receiving at least one of the following: (408) from the first device (430) at least one resource index that satisfies at least one measurement test condition and at least one activation rule; or (409) from the second device (440) at least one resource that satisfies at least one of the measurement test conditions and at least one reading rule.

In some example embodiments, the first device may include a candidate activator user equipment.

In various example embodiments, the second device may include a candidate reader user equipment.

In certain example embodiments, the conditional activation configuration may include at least one of the following: a set of candidate times, frequencies, space, and time and frequency resources to be tested by the first device; at least one measurement associated with spectral availability of each of the candidate resources; the at least one measurement test condition; or the at least one activation rule.

In some example embodiments, the at least one activation rule may be configured to be activated upon satisfaction of at least one condition including at least one of the following: transmitting (407) at least one activation signal; or deferring transmission by a time offset.

In various example embodiments, the ambient device may include an Internet of Things device.

In certain example embodiments, an apparatus may include circuitry configured to perform any of the processes or functions illustrated in FIGs. 4-7. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

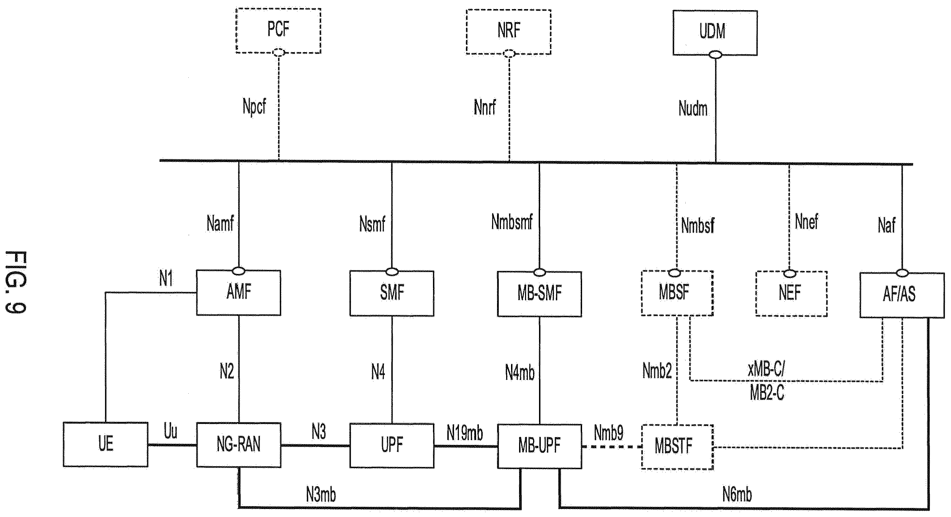

FIG. 9 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 9 may be similar to NE 810 and UE 820, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 811 and 821, and memories 812 and 822, may be included in or may form a part of processing circuitry or control circuitry. In addition, in some example embodiments, transceivers 813 and 823 may be included in or may form a part of transceiving circuitry.

In some example embodiments, an apparatus (*e.g*., NE 810 and/or UE 820) may include means for performing a method, a process, or any of the variants discussed herein. Examples of the means may include one or more processors, memory, controllers, transmitters, receivers, and/or computer program code for causing the performance of the operations.

In various example embodiments, apparatus 820 may be controlled by memory 8222 and processor 821 to receive (402a) a conditional activation configuration from a network entity (420) configured to activate an ambient device (450); transmit (407) an activation signal to the ambient device (450) according to at least one activation rule comprised in the activation configuration on at least one candidate resource and satisfying at least one measurement test condition; and report (408) to the network entity (420) at least one resource index that satisfies the at least one measurement test condition and at least one activation rule.

Certain example embodiments may be directed to an apparatus that includes means for performing any of the methods described herein including, for example, means for receiving (402a) a conditional activation configuration from a network entity (420) configured to activate an ambient device (450); means for transmitting (407) an activation signal to the ambient device (450) according to at least one activation rule comprised in the activation configuration on at least one candidate resource and satisfying at least one measurement test condition; and means for reporting (408) to the network entity (420) at least one resource index that satisfies the at least one measurement test condition and at least one activation rule.

In various example embodiments, apparatus 820 may be controlled by memory 822 and processor 821 to receive (402b) a conditional reading configuration from a network entity (420) configured to read an ambient device (450); activate (407) the reading of the ambient device (450) according to at least one reading rule comprised in the activation configuration on at least one candidate resource passing a test of at least one condition; and report (409) to the network entity (420) at least one resource index that satisfies the at least one reading rule and passed the test of the at least one condition.

Certain example embodiments may be directed to an apparatus that includes means for performing any of the methods described herein including, for example, means for receiving (402b) a conditional reading configuration from a network entity (420) configured to read an ambient device (450); means for activating (407) the reading of the ambient device (450) according to at least one reading rule comprised in the activation configuration on at least one candidate resource passing a test of at least one condition; and means for reporting (409) to the network entity (420) at least one resource index that satisfies the at least one reading rule and passed the test of the at least one condition.

In various example embodiments, apparatus 810 may be controlled by memory 812 and processor 811 to select (401) at least one of a first device (430) or a second device (440); transmit at least one of the following: (402a) to the first device (430) a conditional activation configuration to activate an ambient device (450); or (402b) to the second device (440) a conditional reading configuration from a network entity configured to read the ambient device; and receive at least one of the following: (408) from the first device (430) at least one resource index that satisfies at least one measurement test condition and at least one activation rule; or (409) from the second device (440) at least one resource that satisfies at least one of the measurement test conditions and at least one reading rule.

Certain example embodiments may be directed to an apparatus that includes means for performing any of the methods described herein including, for example, means for means for selecting (401) at least one of a first device (430) or a second device (440); means for transmitting at least one of the following: (402a) to the first device (430) a conditional activation configuration to activate an ambient device (450); or (402b) to the second device (440) a conditional reading configuration from a network entity configured to read the ambient device; and means for receiving at least one of the following: (408) from the first device (430) at least one resource index that satisfies at least one measurement test condition and at least one activation rule; or (409) from the second device (440) at least one resource that satisfies at least one of the measurement test conditions and at least one reading rule.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3^{rd} Generation Partnership Project
- 5G: 5^{th} Generation
- 5GC: 5^{th} Generation Core
- 6G: 6^{th} Generation
- AF: Application Function
- ASIC: Application Specific Integrated Circuit
- CBSD: Citizens Broadband Radio Service Device
- CLI: Cross Link Interference
- CN: Core Network
- CPU: Central Processing Unit
- CU: Centralized Unit
- DL: Downlink
- DMRS: Demodulation Reference Signal
- DU: Distributed Unit
- eMBB: Enhanced Mobile Broadband
- eMTC: Enhanced Machine Type Communication
- eNB: Evolved Node B
- FDD: Frequency Division Duplex
- gNB: Next Generation Node B
- GPS: Global Positioning System
- HDD: Hard Disk Drive
- ID: Identifier
- IoT: Internet of Things
- LMF: Location Management Function
- LPWA: Low-Power Wide-Area
- LTE: Long-Term Evolution
- LTE-A: Long-Term Evolution Advanced
- MEMS: Micro Electrical Mechanical System
- MIMO: Multiple Input Multiple Output
- mMTC: Massive Machine Type Communication
- MO: Mobile Originated
- NE: Network Entity
- NG: Next Generation
- NG-eNB: Next Generation Evolved Node B
- NG-RAN: Next Generation Radio Access Network
- NR: New Radio
- NW: Network
- PDA: Personal Digital Assistance
- QoS: Quality of Service
- RAM: Random Access Memory
- RAN: Radio Access Network
- RAT: Radio Access Technology
- RedCap: Reduced Capability
- RF: Radio Frequency
- ROM: Read-Only Memory
- RSRP: Reference Signal Received Power
- RSSI: Receive Signal Strength Indicator
- RSU: Road Side Unit
- Rx: Reception
- SOT: Spectral Occupancy Threshold
- TDD: Time Division Duplex
- TRP: Transmit Receive Point
- Tx: Transmission
- UE: User Equipment
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network

## Claims

1. An apparatus comprising:
means for receiving a conditional activation configuration from a network entity configured to activate an ambient device;
means for transmitting an activation signal to the ambient device according to at least one activation rule comprised in the activation configuration on at least one candidate resource and satisfying at least one measurement test condition; and
means for reporting to the network entity at least one resource index that satisfies the at least one measurement test condition and at least one activation rule.

2. The apparatus of claim 1, wherein the conditional activation configuration comprises at least one of the following:
a set of candidate times, frequencies, space, and time and frequency resources to be tested by the apparatus;
at least one measurement associated with spectral availability of each of the candidate resources;
the at least one measurement test condition; or
the at least one activation rule.

3. The apparatus of claim 1, wherein the at least one activation rule comprises at least one of the following:
at least one received signal strength indicator measurement is less than a spectral occupancy threshold; or
at least one cross-link interference reference signal received power is less than the spectral occupancy threshold.

4. The apparatus of claim 1, wherein the at least one activation rule is configured to be activated upon satisfaction of at least one condition comprising at least one of the following:
transmit at least one activation signal;
abort at least one transmission attempt; or
defer transmission by a time offset.

5. An apparatus comprising:
means for receiving a conditional reading configuration from a network entity configured to read an ambient device;
means for activating the reading of the ambient device according to at least one reading rule comprised in the activation configuration on at least one candidate resource passing a test of at least one condition; and
means for reporting to the network entity at least one resource index that satisfies the at least one reading rule and passed the test of the at least one condition.

6. The apparatus of claim 5, wherein the conditional reading configuration comprises at least one of the following:
a set of candidate times, frequencies, space, and time and frequency resources to be tested by the apparatus;
at least one measurement associated with spectral availability of each of the candidate resources;
the at least one measurement test condition; or
the at least one reading rule.

7. The apparatus of claim 6, wherein the at least one reading rule comprises at least one of the following:
at least one received signal strength indicator measurement is less than a spectral occupancy threshold; or
at least one cross-link interference reference signal received power is less than the spectral occupancy threshold.

8. The apparatus of any of claims 6-7, wherein the at least one reading rule is configured to be activated upon satisfaction of at least one condition comprising at least one of the following:
read at least one return signal reflected from the ambient device in response to an activation signal; or
defer reading by a time offset.

9. An apparatus comprising:
at least one processor; and
at least one memory storing instructions that, when executed by the at least one processor, cause the apparatus at least to:
select at least one of a first device or a second device;
transmit at least one of the following:
to the first device a conditional activation configuration to activate an ambient device; or
to the second device a conditional reading configuration from a network entity configured to read the ambient device; and
receive at least one of the following:
from the first device at least one resource index that satisfies at least one measurement test condition and at least one activation rule; or
from the second device at least one resource that satisfies at least one of the measurement test conditions and at least one reading rule.

10. The apparatus of claim 9, wherein the first device comprises a candidate activator user equipment.

11. The apparatus of claim 9 or 10, wherein the second device comprises a candidate reader user equipment.

12. The apparatus of any of claims 9-11, wherein the conditional activation configuration comprises at least one of the following:
a set of candidate times, frequencies, space, and time and frequency resources to be tested by the first device;
at least one measurement associated with spectral availability of each of the candidate resources;
the at least one measurement test condition; or
the at least one activation rule.

13. The apparatus of claim 12, wherein the at least one activation rule is configured to be activated upon satisfaction of at least one condition comprising at least one of the following:
transmitting at least one activation signal; or
deferring transmission by a time offset.
